# EUROPEAN PATENT APPLICATION

(11) **EP 4 484 159 A1**
(43) Date of publication of application: **01.01.2025**
(21) Application number: 23382660.1
(22) Date of filing: 28.06.2023
(51) Int. Cl.: B32B 27/08, B32B 27/30, B32B 27/32, C08J 5/18, C08L 23/08

(54) **DEVELOPMENT OF NOVEL FILM STRUCTURES THAT SIGNIFICANTLY INCREASE THE TEAR AND DART IMPACT PROPERTIES**

(71) Applicant: Dow Global Technologies LLC, Midland, MI 48674 (US)
(72) Inventor: PARKINSON, Shaun, 43006 Tarragona (ES); ZARIOUI, Salma el Marrasse, 43006 Tarragona (ES); OSWALD, Marc, 43006 Tarragona (ES)
(74) Representative: Elzaburu S.L.P.

(57) **Abstract**

A multilayer film may comprise a first skin layer, a second skin layer, and a core. The first skin layer and the second skin layer may comprise an ethylene based polymer. The core comprises a first core layer, a second core layer, and a third core layer. The second core layer may comprise ethylene-propylene copolymer, polypropylene copolymer, or combinations thereof. The first core layer and the third core layer may independently comprise a polyethylene composition comprising: a first polyethylene fraction and a second polyethylene fraction. The polyethylene composition may have a density of 0.910 g/cm³ to 0.940 g/cm³ and a melt index (I₂) of 0.20 g/10 minutes to 10.0 g/10 minutes.

## Description

### TECHNICAL FIELD

Embodiments described herein generally relate to multilayer films and, more specifically, to multilayer films used for silage wrapping.

### BACKGROUND

In the interest of improving sustainability and reducing cost, it is desirable to reduce the thickness of the films, such as those which can be used to make silage wrap. Reducing thickness reduces the amount of material employed and therefore the total emissions. However, this reduction in thickness (also called "down gauging") must be accomplished without sacrificing important physical properties such as impact resistance and tear resistance while maintaining stiffness. It becomes progressively more difficult to meet these specifications as the film is down gauged, especially below 25 µm.

Over the last few decades, there have been many new material developments that have facilitated the manufacturer of films with significant impact strength and stiffness improvements. However, these improvements have come at the expense of tear resistance, which has actually decreased.

### BRIEF SUMMARY

Accordingly, thinner films which can meet the impact resistance, tear resistance, and stiffness requirements are desired. Embodiments of the present disclosure meet this need by providing a multilayer film comprising a core layer which comprises an ethylene-propylene copolymer, a polypropylene copolymer, or combinations thereof; and two additional core layers which are relatively stiff and impact resistant.

According to one embodiment of the present disclosure, a multilayer film may comprise a first skin layer, a second skin layer, and a core positioned between the first skin layer and the second skin layer. The first skin layer and the second skin layer may comprise an ethylene based polymer. The core may comprise a first core layer, a second core layer, and a third core layer. The first core layer and the third core layer may independently comprise a polyethylene composition. The polyethylene composition may comprise (a) a first polyethylene fraction having a single peak in a temperature range of 45 °C to 87 °C in an elution profile via improved comonomer composition distribution (iCCD) analysis method, wherein a first polyethylene fraction area is an area in the elution profile beneath the single peak of the first polyethylene fraction between 45 °C and 87 °C; and (b) a second polyethylene fraction having a single peak in a temperature range of 95 °C to 120 °C in the elution profile via iCCD analysis method and wherein a second polyethylene fraction area is an area in the elution profile beneath the single peak of the second polyethylene fraction between 95 °C and 120 °C. The polyethylene composition may have a density of 0.910 g/cm³ to 0.940 g/cm³ and a melt index (I₂) of 0.20 g/10 minutes to 10.0 g/10 minutes. The first polyethylene fraction area may comprise at least 40% of the total area of the elution profile, wherein a ratio of the first polyethylene fraction area to the second polyethylene fraction area may be 0.75 to 2.5, and wherein the width of the single peak of the second polyethylene fraction at 50 percent peak height may be less than 5.0 °C. The second core layer may comprise ethylene-propylene copolymer, polypropylene copolymer, or combinations thereof.

Additional features and advantages will be set forth in the detailed description which follows, and in part will be readily apparent to those skilled in the art from that description or recognized by practicing the embodiments described herein, including the detailed description which follows and the claims.

It is to be understood that both the foregoing general description and the following detailed description describe various embodiments and are intended to provide an overview or framework for understanding the nature and character of the claimed subject matter.

### BRIEF DESCRIPTION OF THE SEVERAL VIEWS OF THE DRAWINGS

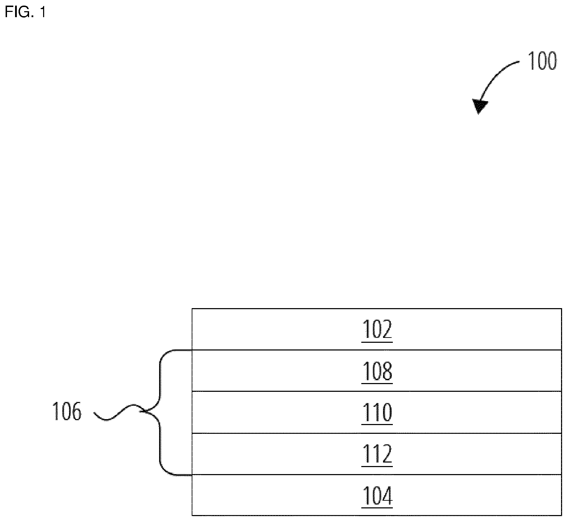

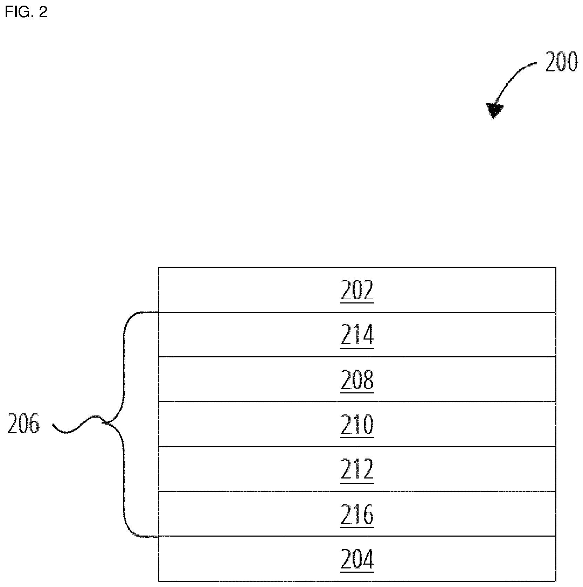

To easily identify the discussion of any particular element or act, the most significant digit or digits in a reference number refer to the figure number in which that element is first introduced. Where two embodiments include the same component, like numerals will be used to describe like components (e.g. first layer 204 in FIG. 2 will correspond to first layer 104 in FIG. 1).
FIG. 1 illustrates a side view of one embodiment of the present multilayer film.
FIG. 2 illustrates a side view of one embodiment of the present multilayer film.
FIG. 3 illustrates a side view of one embodiment of the present multilayer film.
FIG. 4 schematically depicts an iCCD elution profile, according to one or more embodiments presently described;

### DETAILED DESCRIPTION

Specific embodiments of the present application will now be described. The disclosure may be embodied in different forms and should not be construed as limited to the embodiments set forth in this disclosure. Rather, these embodiments are provided so that this disclosure will be thorough and complete, and will fully convey the scope of the subject matter to those skilled in the art.

As discussed above, thinner films which can still meet the impact resistance, tear resistance, and stiffness requirements for use in agricultural applications, such as silage wrapping are desired. Embodiments of the present disclosure meet this need by providing a multilayer film comprising a second core layer which comprises ethylene-propylene copolymer, polypropylene copolymer, or combinations thereof; and a first and third core layer which is relatively stiff and impact resistant.

### Definitions

"Ethylene-propylene copolymer" refers to ethylene-based polymers with propylene comonomers. The ethylene-propylene copolymers of the present disclosure may comprise a majority (greater than 50 wt. %) of the residues of ethylene monomers, based on the total polymer weight of the ethylene-propylene copolymer. The remainder of the polymer weight of the ethylene-propylene copolymer may comprise the residues of propylene monomers.

"Polypropylene" or "propylene-based polymers" shall mean polymers comprising greater than 50% by weight of units derived from propylene monomer. This includes polypropylene homopolymers or copolymers (meaning units derived from comonomer, such as ethylene). Common forms of polypropylene known in the art include homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof. Polypropylene further includes elastomeric propylene-ethylene copolymers, such as those commercially available under the trade name VERSIFY^{™} from Dow Inc. (Midland, Mi).

"Ethylene-acrylate copolymer" refers to copolymers of ethylene monomer and acrylate comonomer. The ethylene-acrylate copolymers of the present disclosure may comprise a majority (greater than 50 wt. %) of the residues of ethylene monomers, based on the total polymer weight of the ethylene acrylate copolymer. The remainder of the polymer weight of the ethylene-acrylate copolymer may comprise the residues of acrylate monomers.

Ethylene vinyl acetate or "EVA" refers to a copolymer of ethylene monomer and vinyl acetate comonomer. The ethylene vinyl acetate copolymers of the present disclosure may comprise a majority (greater than 50 wt. %) of the residues of ethylene monomers, based on the total polymer weight of the ethylene vinyl acetate copolymer. The remainder of the polymer weight of the ethylene vinyl acetate copolymer may comprise the residues of vinyl acetate monomers.

"Residues" refers to the portion of a polymer derived from a specific monomer.

"gf/µm" refers to grams force per micron.

"Multilayer film" refers to any structure having more than one layer. For example, the multilayer structure may have five or more layers, such as 6, 7, 89, 10, or 11 layers. In embodiments, the multilayer film may have an odd number of layers, such as 5, 6, 9, or 11 layers.

"Polyethylene" as used herein, refers to "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

The term "ULDPE" is defined as a polyethylene-based copolymer having a density in the range of 0.895 to 0.915 grams per cubic centimeter (g/cc).

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example U.S. Pat. No. 4,599,392, incorporated herein by reference).

The term "LLDPE", includes resins made using the traditional Ziegler-Natta catalyst systems as well as single-site catalysts such as metallocenes (sometimes referred to as "m-LLDPE"). LLDPEs contain less long chain branching than LDPEs and include the substantially linear ethylene polymers which are further defined in U.S. Pat. No. 5,272,236, U.S. Pat. No. 5,278,272, U.S. Pat. No. 5,582,923 and U.S. Pat. No. 5,733,155; the homogeneously branched linear ethylene polymer compositions such as those in U.S. Pat. No. 3,645,992; the heterogeneously branched ethylene polymers such as those prepared according to the process disclosed in U.S. Pat. No. 4,076,698; and/or blends thereof (such as those disclosed in U.S. Pat. No. 3,914,342 or U.S. Pat. No. 5,854,045). The LLDPE can be made via gas-phase, solution-phase or slurry polymerization or any combination thereof, using any type of reactor or reactor configuration known in the art, including, but not limited to, gas and solution phase reactors.

The term "C6 LLDPE" refers to ethylene based polymers produced from ethylene monomer and hexene comonomer. Similarly, "C4 LLDPE" refers to ethylene-based polymers produced from ethylene monomer and butene comonomer, and "C8 LLDPE" refers to ethylene-based polymers produced from ethylene monomer and octene comonomer.

The term "HDPE" generally refers to polyethylenes having densities greater than about 0.935 g/cc and up to about 0.980 g/cc, which are generally prepared with Ziegler-Natta catalysts, chrome catalysts or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy).

"Polymer" refers to a polymeric compound prepared by polymerizing monomers, whether of the same or a different type. The term polymer thus embraces the term homopolymer (employed to refer to polymers prepared from only one type of monomer, with the understanding that trace amounts of impurities can be incorporated into the polymer structure), and the term copolymer or interpolymer. Trace amounts of impurities (for example, catalyst residues) may be incorporated into and/or within the polymer. A polymer may be a single polymer or a polymer blend.

As used herein, the term "copolymer" means a polymer formed by the polymerization reaction of at least two structurally different monomers. The term "copolymer" is inclusive of terpolymers. For example, ethylene copolymers, such as ethylene-propylene copolymers, include at least two structurally different monomers (e.g., ethylene-propylene copolymer includes copolymerized units of at least ethylene monomer and propylene monomer) and can optionally include additional monomers or functional materials or modifiers, such as acid, acrylate, or anhydride functional groups. Put another way, the copolymers described herein comprise at least two structurally different monomers, and although the copolymers may consist of only two structurally different monomers, they do not necessarily consist of only two structurally different monomers and may include additional monomers or functional materials or modifiers.

"wt. %" means weight percentage.

"g/10 min" means grams per ten minutes.

### EMBODIMENTS

As depicted in FIG. 1, a multilayer film 100 may comprise a first skin layer 102, a second skin layer 104, and a core 106. The core 106 may be positioned between the first skin layer 102 and the second skin layer 104. The core 106 may comprise a first core layer 108, a second core layer 110, and a third core layer 112.

### The Second Core Layer

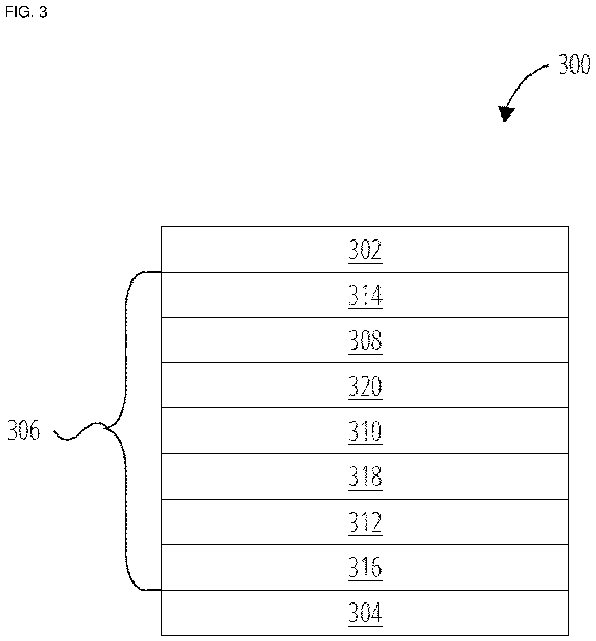

The multilayer film 100 may comprise a second core layer 110. The second core layer 110 may be in contact with at least one of the first core layer 108 and the third core layer 112. In embodiments, the second core layer 110 may be disposed between the first core layer 108 and the third core layer 112. In embodiments, the second core layer 110 may be in contact with each of, the first core layer 108 and the third core layer 112. In alternate embodiments, such as those depicted in FIG. 3, additional layers 318 and 320 may be in direct contact with the second core layer 310.

Referring again to FIG. 1, the second core layer 110 may comprise at least one of a polypropylene or an ethylene-propylene copolymer. In embodiments, the second core layer 110 may comprise at least 50 wt. %, such as at least 60 wt. %, at least 70 wt. %, at least 80 wt. %, at least 90 wt. %, at least 95 wt. %, or even at least 99 wt. % of the at least one of a polypropylene or an ethylene-propylene copolymer.

The polypropylene may comprise at least 90 wt. % of the propylene monomer, based on the total polymer weight of the polypropylene. In embodiments, the polypropylene may comprise at least 95 wt. %, at least 99 wt. %, at least 99.9 wt. %, or even 100 wt. % of the propylene monomer, based on the total polymer weight of the polypropylene. Suitable polypropylenes are available from Dow Inc., Midland MI, under the trade name VERSIFY^{™}. Additional suitable polypropylenes are available from ExxonMobil under the trade name VISTAMAXX^{™} and from Mitsui Chemicals under the trade name TAMFER^{™} XM.

The ethylene-propylene copolymer of the second core layer 110 may comprise from 60 wt. % to 95 wt. % of ethylene monomer and 5 wt. % to 40 wt. % of propylene comonomer. In embodiments, the ethylene-propylene copolymer may comprise from 60 wt. % to 90 wt. %, from 60 wt. % to 80 wt. %, from 60 wt. % to 70 wt. %, from 70 wt. % to 95 wt. %, from 80 wt. % to 95 wt. %, from 90 wt. % to 95 wt. %, from 70 wt. % to 80 wt. %, or any subset thereof, of the ethylene monomer and from 5 wt.% to 30 wt. %, from 5 wt. % to 20 wt. %, from 5 wt. % to 10 wt. %, from 10 wt. % to 40 wt. %, from 20 wt. % to 40 wt. %, from 30 wt. % to 40 wt. %, from 10 wt. % to 35 wt. %, from 20 wt. % to 30 wt. %, or any subset thereof of the propylene comonomer.

The ethylene-propylene copolymer may have a density in the range of from 0.865 g/cc to 0.925 g/cc. In embodiments, the ethylene-propylene copolymer may have a density of from 0.875 g/cc to 0.925 g/cc, from 0.885 g/cc to 0.925 g/cc, from 0.900 g/cc to 0.925 g/cc, from 0.910 g/cc to 0.925 g/cc, from 0.865 g/cc to 0.910 g/cc, from 0.865 g/cc to 0.895 g/cc, from 0.865 g/cc to 0.880 g/cc, from 0.880 g/cc to 0.910 g/cc, or any subset thereof.

The ethylene-propylene copolymer may have a melt index (I₂) from 0.5 g/10 min to 8.0 g/10 min. In embodiments, the ethylene-propylene copolymer may have a melt index (I₂) of from of from 0.5 g/10 min to 6 g/10 min, from 0.5 g/10 min to 4 g/10 min, from 0.5 g/10 min to 3 g/10 min, from 2 g/10 min to 7 g/10 min, from 3 g/10 min to 6 g/10 min, or any subset thereof. In embodiments, the multilayer film 100 may be a cast stretch film and may the ethylene-propylene copolymer may have a melt index (I₂) of from 3 g/10 min to 6 g/10 min. In embodiments, the multilayer film 100 may be a blown film and the ethylene-propylene copolymer may have a melt index (I₂) of from 0.5 g/10 min to 3 g/10 min.

The ethylene-propylene copolymer may have a molecular weight distribution (MWD) of from 3.0 to 5.0, as measured by conventional gel permeation chromatography (GPC), where MWD is defined as Mw/Mn with Mw being a weight-average molecular weight and Mn being a number-average molecular weight. In embodiments, the ethylene-propylene copolymer may have a MWD from 3.0 to 4.0, from 4.0 to 5.0, from 3.5 to 4.5, or any subset thereof. Suitable ethylene-propylene copolymers are available from Dow Inc., Midland MI, under the trade name XUS 39003.00.

### Arrangement of the Core Layers

Still referring to FIG. 1, the core 106 may comprise a first core layer 108 and a third core layer 112. The first core layer 108 may be positioned between the first skin layer 102 and the second core layer 110. The third core layer 112 may be positioned between the second core layer 110 and the second skin layer.

Referring now to FIG. 2, a multilayer film 200 may comprise a first skin layer 202, a second skin layer 204, and a core 206. The core 206 may be positioned between the first skin layer 202 and the second skin layer 204. The core 206 may comprise a first core layer 208, a third core layer 212, and a second core layer 210. The core 206 may further comprise a fourth core layer 214 and a fifth core layer 216.

Referring now to FIG. 3, a multilayer film 300 may comprise a first skin layer 302, a second skin layer 304, and a core 306. The core 306 may comprise a first core layer 308, a third core layer 312, and a second core layer 310. The core 306 may further comprise a fourth core layer 314 and a fifth core layer 316. The core 306 may further comprise a sixth core layer 318 and a seventh core layer 320.

The core 206 layers may be arranged in any order. As shown in FIG. 2, the fourth core layer 214 may be positioned between the first skin layer 202 and the first core layer 208. In embodiments not depicted, the fourth core layer may be positioned between the first core layer and the second core layer. As depicted in FIG. 2, the fifth core layer 216 may be positioned between the second skin layer 204 and the third core layer 212. In embodiments not depicted, the fifth core layer may be positioned between the second core layer and the third core layer. In embodiments, the second core layer 210 may be positioned between the first core layer 208 and the third core layer 212. Accordingly, the second core layer 210 may be the central layer. Without intending to be limited by theory, while the second core layer will add performance in any internal layer between the first skin layer and the second skin layer, there will be a significant improvement in performance when the second core layer is the central layer.

As depicted in FIG. 3, the first core layer 308 may be disposed between the second core layer 310 and the first outer layer 302. The fourth core layer 314 may be disposed between the first core layer 308 and the first outer layer 302. The seventh core layer 320 may be disposed between the second core layer 310 and the first core layer 308. The third core layer 312 may be disposed between the second core layer 310 and the second outer layer 304. The fifth core layer 316 may be disposed between the third core layer 312 and the second outer layer 304. The sixth core layer 318 may be disposed between the second core layer 310 and the third core layer 312. It should be understood that the order of the layers described in FIG. 3 is merely illustrative and in some embodiments, the core layers may be arranged in any order.

### The First and Third Core Lavers

Referring again to FIG. 1 - FIG. 3, the first core layer 108, 208, 308 and/or the third core layer 112, 212, 312 may each independently comprise a polyethylene composition. In embodiments, , the first core layer 108, 208, 308 and/or the third core layer 112, 212, 312 may each independently comprise at least 80 wt. %, at least 90 wt. %, at least 95 wt. %, at least 99 wt. %, or even at least 99.9 wt. % of the polyethylene composition, on the basis of the total weight of the layer,

In one or more embodiments, the polyethylene composition may have a density of 0.910 g/cm³ to 0.940 g/cm³. For example, embodiments of the presently disclosed polyethylene compositions may have densities of from 0.910 to 0.936, from 0.915 g/cm³ to 0.936 g/cm³, from 0.924 g/cm³ to 0.936 g/cm³, from 0.924 g/cm³ to 0.931 g/cm³, from 0.924 g/cm³ to 0.928 g/cm³, from 0.927 g/cm³ to 0.931 g/cm³, or from 0.929 g/cm³ to 0.933 g/cm³. According to additional embodiments, the polyethylene composition may have a density of from 0.924 to 0.928, from 0.928 g/cm³ to 0.932 g/cm³, from 0.932 g/cm³ to 0.936 g/cm³, or any combination of these ranges.

In one or more embodiments, the polyethylene composition may have a melt index (I₂) of from 0.20 g/10 minutes to 10 g/10 minutes, from 0.20 g/10 minutes to 8.0 g/ 10 minutes, from 0.20 g/10 minutes to 6.0 g/10 minutes, from 0.20 g/10 minutes to 4.0 g/10 minutes, from 0.20 g/10 minutes to 2.0 g/10 minutes, from 0.25 g/10 minutes to 2.0 g/10 minutes, from 0.5 g/10 minutes to 1.2 g/10 minutes, or any subset thereof. For example, in one or more embodiments, the polyethylene composition may have a melt index (I₂) of from 0.25 g/10 minutes to 0.5 g/10 minutes, from 0.5 g/10 minutes to 0.7 g/10 minutes, from 0.7 g/10 minutes to 0.9 g/10 minutes, from 0.59 g/10 minutes to 1.1 g/10 minutes, from 1.1 g/10 minutes to 1.3 g/10 minutes, from 1.3 g/10 minutes to 1.5 g/10 minutes, from 1.5 g/10 minutes to 1.7 g/10 minutes, from 1.7 g/10 minutes to 2.0 g/10 minutes, or any combination of these ranges. According to additional embodiments, the polyethylene composition may have a melt index (I₂) of from 0.65 to 1.05.

According to embodiments, the polyethylene compositions may have a molecular weight distribution, expressed as the ratio of the weight average molecular weight to number average molecular weight (Mw/Mn), in the range of from 2.5 to 8.0. For example, the polyethylene composition may have a molecular weight distribution of from 2.5 to 3.0, from 3.0 to 3.5, from 3.5 to 4.0, from 4.0 to 4.5, from 4.5 to 5.0, from 5.0 to 5.5, from 5.5 to 6.0, from 6.0 to 6.5, from 6.5 to 7.0, from 7.0 to 7.5, from 7.5 to 8.0, or any combination of these ranges. In additional embodiments, the polyethylene composition may have a molecular weight distribution of from 3.0 to 5.0. As presently described, the molecular weight distribution may be calculated according to gel permeation chromatography (GPC) techniques as described herein.

According to one or more additional embodiments, the polyethylene composition may have a zero shear viscosity ratio of less than 3.0. For example, the polyethylene composition may have a zero shear viscosity ratio of less than 2.9, less than 2.8, less than 2.7, less than 2.6, less than 2.5, less than 2.4, less than 2.3, less than 2.2, less than 2.1, less than 2.0, less than 1.9, less than 1.8, less than 1.7, less than 1.6, less than 1.5, less than 1.4, less than 1.3, less than 1.2, or even less than 1.1. In one or more embodiments, the polyethylene composition may have a zero shear viscosity ratio of at least 1.0.

As described herein, a polyethylene "fraction" refers to a portion of the total composition of the polyethylene composition. The presently disclosed embodiments include at least a "first polyethylene fraction" and a "second polyethylene fraction." The various fractions included in the polyethylene composition may be quantified by their temperature range in an elution profile via improved comonomers composition distribution (iCCD) analysis method. Unless specified, any elution profile referred to herein is the elution profile observed via iCCD. Examples of such fractions will be better understood in view of the examples provided herewith. In general, the first fraction may include a single peak in the temperature range of the first fraction and the second fraction may include a single peak in the temperature range of the second fraction. The polyethylene compositions described herein may be referred to as "multimodal," meaning that they include at least two peaks in their elution profile. Some embodiments may be "bimodal," meaning that two major peaks are present.

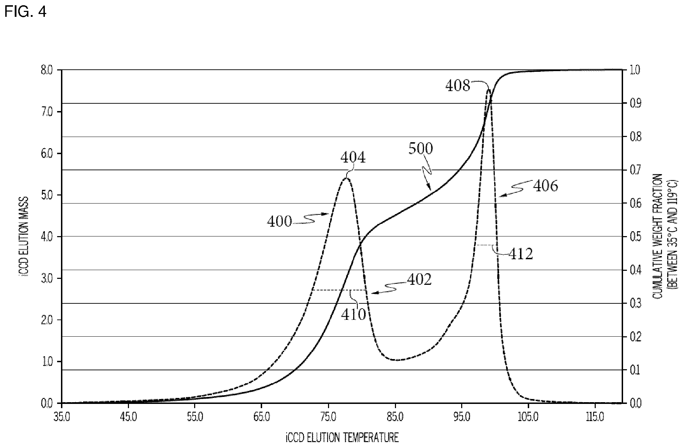

In reference to the described iCCD distribution, FIG. 3 schematically depicts a sample iCCD distribution 400 along with the cumulative weight fraction curve 500. FIG. 4 depicts, generally, several features of the iCCD profiles of the presently described polyethylene compositions, such as the first fraction, the second fraction, half peak widths, etc., which are discussed in detail herein. As such, FIG. 4 can be used as a reference with respect to the disclosures related the iCCD profile provided herein. Specifically, the first fraction 402 and second fraction 406 are depicted. The first fraction 402 has a peak 404 and the second fraction 406 has a peak 408. Each fraction has a half peak width 410 and 412. It should be understood that the profile of FIG. 4 is not derived from experimentation or observation, but is instead supplied for informational purposes of describing particular features of an iCCD elution profile.

In one or more embodiments, the first polyethylene fraction may have a single peak in a temperature range of 45 °C to 87 °C in an elution profile via iCCD. As used herein, a "single peak" refers to an iCCD wherein a particular fraction include only a single peak. That is, in some embodiments, the iCCD of the first and second polyethylene fraction includes only an upward sloping region followed by a downward sloping region to form the single peak. In one or more embodiments, the single peak of the first polyethylene fraction may be in a temperature range of from 60 °C to 85 °C, such as from 70 °C to 85 °C. Without being bound by theory, it is believed that in at least some embodiments of the presently disclosed polyethylene composition where a dual reactor design is used for polymerization, a combination of higher density crystalline domain and lower density amorphous domain may exist. The impact strength is controlled predominantly by the amorphous region or the tie concentrations that connect the adjacent lamellae. The relative tie chain concentration is estimated to be relatively large when the density is less than 0.910 g/cc. The peak of the first polymer fraction in the presently disclosed compositions may lie in the temperature range of 60 °C to 85 °C, which may provide greater tie-chain concentration for functional benefits such as improved toughness.

It should be understood that a peak in the first or second polyethylene fraction may not be formed by a local minimum in the respective polyethylene fraction at a defined temperature boundary. That is, the peak must be a peak in the context of the entire spectrum, not a peak formed by the threshold temperature of a polyethylene fraction. For example, if a single peak followed by a single valley were present in a polyethylene fraction (an upward slope followed by a downward slope followed by an upward slope), only a single peak would be present in such a polyethylene fraction.

In one or more embodiments, the second polyethylene fraction may have a single peak in the temperature range of 95 °C to 120 °C in the elution profile via iCCD. The temperature range of the second polyethylene fraction of 95 °C to 120 °C may be desirable because the low molecular weight, high density component at 95 °C to 120 °C may allow the polyethylene to achieve higher overall density while maintaining a lower density fraction as described by the ratio of these two fractions.

In one or more embodiments, the width of the single peak of the second polyethylene fraction at 50 percent peak height may be less than 5.0 °C, less than 4 °C, or even less than 3 °C. Generally, lesser temperature ranges at 50 percent peak heights correspond to a "sharper" peak. Without being bound by any particular theory, it is believed that a "sharper" or "narrower" peak is a characteristic caused by the molecular catalyst and indicates minimum comonomer incorporation on the higher density fraction, enabling higher density split between the two fractions.

In one or more embodiments, the polyethylene composition may have a local minimum in an elution profile via iCCD in a temperature range of from 80 °C to 90 °C. This local minimum may fall between the peaks of the first polyethylene fraction and the second polyethylene fraction.

In embodiments described herein, the first polyethylene fraction area is the area in the elution profile between 45 °C and 87 °C, beneath the single peak of the first polyethylene fraction°C. Similarly, the second polyethylene fraction area is the area in the elution profile between 95 °C and 120 °C, beneath the single peak of the second polyethylene fraction. The first polyethylene fraction area and the second polyethylene fraction area, respectively, may correspond generally with the total relative mass of each polymer fraction in the polyethylene composition. In general, a polyethylene fraction area in an iCCD profile may be determined by integrating the iCCD profile between the starting and ending temperatures specified.

According to one or more embodiments, the difference between the single peak of the second polyethylene fraction and the single peak of the first polyethylene fraction may be at least 10 °C. For example, the difference between the single peak of the second polyethylene fraction and the single peak of the first polyethylene fraction may be at least 12 °C, 14 °C, 16 °C, 18 °C, or even at least 20 °C.

In one or more embodiments, the first polyethylene fraction area may comprise at least 40% of the total area of the elution profile (for example, at least 42%, at least 44%, at least 46%, at least 48%, at least 50%, at least 52%, or even at least 54% of the total area of the elution profile). For example, the first polyethylene fraction area may comprise from 40% to 65% of the total area of the elution profile, such as from 42% to 58%, from 43% to 45%, from 45% to 47%, from 53% to 55%, or from 55% to 57%.

According to one or more embodiments, the second polyethylene fraction area may comprise at least 25% of the total area of the elution profile (for example, at least 30%, at least 35%, or even at least 40% of the total area of the elution profile). For example, the first polyethylene fraction area may comprise from 20% to 50%, from 27% to 31% or from 41% to 48% of the total area of the elution profile.

According to some embodiments, a ratio of the first polyethylene fraction area to the second polyethylene fraction area may be from 0.75 to 2.5 (such as 0.75 to 1.0, 1.0 to 1.25, from 1.25 to 1.5, from 1.5 to 1.75, from 1.75 to 2.0, from 2.0 to 2.25, from 2.25 to 2.5, or any combination of these ranges).

In one or more embodiments, the polyethylene composition is formed from the polymerization of ethylene and a comonomers such as a C3-C12 alkene. Contemplated comonomers include C6-C9 alkenes, such as 1-octene and 1-hexene. In one or more embodiments the comonomers is 1-octene.

In one or more embodiments, the difference between the single peak of the second polyethylene fraction and the single peak of the first polyethylene fraction is at least 10 °C, at least 12.5 °C at least 15 °C, at least 17.5 °C, or even at least 20 °C.

In one or more embodiments, the first polyethylene fraction may have a melt index (I₂) of 0.01 to 0.18 g/10 minutes. For example, according to one or more embodiments, the first polyethylene fraction may have a melt index (I₂) of from 0.01 g/10 minutes to 0.03 g/10 minutes, from 0.03 g/10 minutes to 0.05 g/10 minutes, from 0.05 g/10 minutes to 0.07 g/10 minutes, from 0.07 g/10 minutes to 0.09 g/10 minutes, from 0.09 g/10 minutes to 0.11 g/10 minutes, from 0.11 g/10 minutes to 0.13 g/10 minutes, from 0.13 g/10 minutes to 0.15 g/10 minutes, from 0.15 g/10 minutes to 0.18 g/10 minutes, or any combination of these ranges.

In one or more embodiments, the second polyethylene fraction may have a melt index (I₂) of 1 to 10,000 g/10 minutes. For example, according to one or more embodiments, the second polyethylene fraction may have a melt index (I₂) of from 10 g/10 minutes to 1,000 g/10 minutes, from 20 g/10 minutes to 800 g/10 minutes, from 1 g/10 minutes to 100 g/10 minutes, from 100 g/10 minutes to 1,000 g/10 minutes, from 1,000 g/10 minutes to 10,000 g/10 minutes, or any combination of these ranges.

In one or more embodiments, the weight average molecular weight of the second polyethylene fraction may be less than or equal to 120,000 g/mol, such as from 20,000 g/mol to 120,000 g/mol , or from 40,000 g/mol to 65,000 g/mol. In additional embodiments, the weight average molecular weight of the second polyethylene fraction may be from 20,000 g/mol to 40,000 g/mol, from 40,000 g/mol to 60,000 g/mol, from 60,000 g/mol to 80,000 g/mol, from 80,000 g/mol to 100,000 g/mol, from 100,000 g/mol to 120,000 g/mol, or any combination of these ranges. Molecular weight of the polyethylene fractions may be calculated based on GPC results, as described herein below.

In one or more embodiments, the presently disclosed polyethylene compositions may further comprise additional components such as one or more additives. Such additives include, but are not limited to, antistatic agents, color enhancers, dyes, lubricants, fillers such as TiO₂ or CaCOs, opacifiers, nucleators, processing aids, pigments, primary anti-oxidants, secondary anti-oxidants, UV stabilizers, anti-blocks, slip agents, tackifiers, fire retardants, anti-microbial agents, odor reducer agents, anti-fungal agents, and combinations thereof. The polyethylene compositions may contain from about 0.1 to about 10 percent by the combined weight of such additives, based on the weight of the polyethylene composition including such additives.

Suitable polyethylene compositions for use in the first core layer 108, 208, 308 and/or the third core layer 112, 212, 312 may be produced in a system comprising two reactors (such as continuously stirred tank reactors "CSTR") in series. In a dual series reactor configuration, the effluent from the first polymerization reactor (containing solvent, monomer, comonomer, hydrogen, catalyst components, and polymer) exits the first reactor loop and is added to the second reactor loop.

The second reactor effluent enters a zone where it is deactivated with the addition of and reaction with a suitable reagent (water). At this same reactor exit location other additives are added for polymer stabilization (typical antioxidants suitable for stabilization during extrusion and film fabrication like Octadecyl 3,5-Di-Tert-Butyl-4-Hydroxyhydrocinnamate, Tetrakis(Methylene(3,5-Di-Tert-Butyl-4-Hydroxyhydrocinnamate))Methane, and Tris(2,4-Di-Tert-Butyl-Phenyl) Phosphite).

### Core Lavers 4-7

The fourth core layer 214, 314 the fifth core layer 216, 316, the sixth core layer 318, and/or the seventh core layer 320 may independently comprise LLDPE. In embodiments, fourth core layer 214, 314 the fifth core layer 216, 316, the sixth core layer 318, and/or the seventh core layer 320 may each independently comprise at least 70 wt. %, such as at least 80 wt. %, at least 90 wt. %, at least 99 wt. %, or even at least 99.9 wt. % of LLDPE, based on the total polymer weight of the layer.

In embodiments where the fourth core layer 214, 314 the fifth core layer 216, 316, the sixth core layer 318, and/or the seventh core layer 320 comprise an LLDPE, the LLDPE may have a density less than or equal to 0.930 g/cc. All individual values and subranges less than or equal to 0.930 g/cc are included and disclosed herein; for example, the density of the linear low density polyethylene can be from a lower limit of 0.870 g/cc to an upper limit of 0.928, 0.925, 0.920 or 0.915 g/cc. All individual values and subranges between 0.870 and 0.930 g/cc are included and disclosed herein.

In embodiments where the fourth core layer 214, 314 the fifth core layer 216, 316, the sixth core layer 318, and/or the seventh core layer 320 comprise an LLDPE, the LLDPE can have a melt index (I2) in the range of from 0.1 g/10 min to 1.5 g/10 min. All individual values and subranges of from 0.1 g/10 min to 1.5 g/10 min are disclosed and included herein. For example, the LLDPE can have a melt index (I2) in the range of from 0.1 g/10 min to 1.3 g/10 min, from 0.1 g/10 min to 1.1 g/10 min, from 0.1 g/10 min to 0.9 g/10 min, from 0.1 g/10 min to 0.7 g/10 min, from 0.3 g/10 min to 1.5 g/10 min, from 0.5 g/10 min to 1.5 g/10 min, from 0.7 g/10 min to 1.5 g/10 min, from 0.3 g/10 min to 1.3 g/10 min, from 0.5 g/10 min to 1.1 g/10 min, or any subset thereof.

Commercially available examples of LLDPEs that can be used in the fourth core layer 214, 314 the fifth core layer 216, 316, the sixth core layer 318, and/or the seventh core layer 320 include those commercially available from Dow Inc. under the name DOWLEX^{™} including, for example, DOWLEX^{™} 2645.

### The Skin Lavers

Referring again to FIGS. 1 and 2, the multilayer film 100, 200 may comprise a first skin layer 102, 202 and a second skin layer 104, 204. In embodiments, the first skin layer 102, 202 and/or the second skin layer 104, 204 may be air contacting layers (e.g. the outermost layers).

The first skin layer 102, 202 may serve as a release layer. A release layer, for example, may have non-cling characteristics or may exhibit lower cling characteristics than a cling layer. The first skin layer 102, 202 may comprise any material suitable for use as a release layer.

The second skin layer 104, 204 may be a cling layer. Cling layers, for example, may enable the multilayer film 100, 200 to cling to itself when the film is wrapped on a load. The second skin layer 104, 204 may comprise any material suitable for use as a cling layer.

The first skin layer 102, 202 and the second skin layer 104, 204 may independently comprise ethylene-based polymers. In embodiments, the first skin layer 102, 202 and/or the second skin layer 104, 204 may comprise greater than 50 wt. % of ethylene monomers, on the basis of the total polymer weight of the layer.

The first skin layer 102, 202 and/or the second skin layer 104, 204 may comprise a linear low-density polyethylene (hereinafter "LLDPE"). In embodiments, the multilayer film 200 may comprise at least 50 wt. %, such as at least 60 wt. %, at least 70 wt. %, at least 80 wt. %, at least 90 wt. %, or even at least 99 wt. % of LLDPE, based on the total polymer weight of the layer.

In embodiments where first skin layer 102, 202 and/or the second skin layer 104, 204 comprise an LLDPE, the LLDPE may have a density less than or equal to 0.940 g/cc. All individual values and subranges less than or equal to 0.940 g/cc are included and disclosed herein; for example, the density of the LLDPE may be from a lower limit of 0.870 g/cc, 0.880 g/cc, 0.890 g/cc, 0.910 g/cc, 0.920 g/cc to an upper limit of 0.940 g/cc, 0.938 g/cc, 0.936 g/cc, or 0.935 g/cc. All individual values and subranges between 0.870 g/cc and 0.940 g/cc are included and disclosed herein.

In embodiments where the first skin layer 102, 202 and/or the second skin layer 104, 204 comprise an LLDPE, the LLDPE can have a melt index (I₂) in the range of from 0.1 g/10 min to 50 g/10 min. All individual values and subranges of from 0.1 g/10 min to 50 g/10 min are disclosed and included herein. For example, the LLDPE can have a melt index (I₂) in the range of from 0.1 g/10 min to 40 g/10 min, 0.1 g/10 min to 30 g/10 min, 0.1 g/10 min to 20 g/10 min, 0.1 g/10 min to 10 g/10 min, or 0.1 g/10 min to 5 g/10 min.

Commercially available examples of LLDPEs that can be used in the multilayer film 200 and/or the multilayer film 200 include those commercially available from Dow Inc., under the name ELITE^{™} and under the name DOWLEX^{™}.

In some embodiments, the first skin layer 102, 202 and/or the second skin layer 104, 204 may comprise a low density polyethylene (LDPE). It should be understood that the first skin layer 102, 202 and the second skin layer 104, 204 may comprise the LDPE in addition to the LLDPE. In embodiments where the multilayer film 200 and/or the multilayer film 200 comprise an LDPE, the LDPE may have a density in the range 0.916 g/cc to 0.935 g/cc. All individual values and subranges of 0.916 g/cc to 0.935 g/cc are included and disclosed herein; for example, the density of the LDPE can be from a lower limit of 0.916 g/cc, 0.918 g/cc, 0.920 g/cc, or 0.922 g/cc to an upper limit of 0.935 g/cc, 0.933 g/cc, 0.931 g/cc, or 0.929 g/cc.

In embodiments where the first skin layer 102, 202 and/or the second skin layer 104, 204 comprise an LDPE, the LDPE can have a melt index (I₂) in the range of from 0.1 g/10 min to 50 g/10 min. All individual values and subranges of from 0.1 g/10 min to 50 g/10 min are disclosed and included herein. For example, the LDPE can have a melt index (I₂) in the range of from 0.1 g/10 min to 40 g/10 min, 0.1 g/10 min to 30 g/10 min, 0.1 g/10 min to 20 g/10 min, 0.1 g/10 min to 10 g/10 min, or 0.1 g/10 min to 5 g/10 min.

In some embodiments the first skin layer 102, 202 and/or the second skin layer 104, 204 can independently comprise from 0 wt. % to 30 wt. % of the LDPE, based on the total weight of the respective layer. All individual values of 0 wt. % to 30 wt. % are disclosed and included herein. For example, the multilayer film 200 and/or the multilayer film 200 can comprise from 0 wt. % to 25 wt. %, from 0 wt. % to 20 wt. %, from 0 wt. % to 10 wt. %, from 0 wt. % to 5 wt. %, from 5 wt. % to 30 wt. %, from 5 wt. % to 20 wt. %, or any subset thereof, based on the total polymer weight of the respective layer.

Commercially available examples of LDPEs that can be used in the multilayer film 200 and/or the multilayer film 200 include those commercially available from Dow Inc. under the name AGILITY^{™} or LDPE 450 E.

The second skin layer 104, 204 may comprise an ethylene-acrylate copolymer, such as ethylene/butyl acrylate copolymer, ethylene/ethyl acrylate copolymer, ethylene/methyl acrylate copolymer. In embodiments, the second skin layer 104, 204 may comprise at least 50 wt. %, such as at least 60 wt. %, at least 70 wt. %, at least 80 wt. %, at least 90 wt. %, at least 95 wt. %, at least 99 wt. %, or even at least 99.9 wt. % of the ethylene-acrylate copolymer, based on the total polymer weight of the second core layer 110.

The ethylene-acrylate copolymer may comprise residues of an acrylate monomer, such as a C₂-C-₆ acrylate monomer or a C₂ to C₅ monomer. In embodiments, the ethylene-acrylate copolymer may comprise from 1 wt. % to 49 wt. %, such as from 5 wt. % to 49 wt. %, from 10 wt. % to 49 wt. %, from 20 wt. % to 49 wt. %, from 30 wt. % to 49 wt. %, from 40 wt. % to 49 wt. %, from 1 wt. % to 40 wt. %, from 1 wt. % to 30 wt. %, from 1 wt. % to 20 wt. %, from 1 wt. % to 10 wt. %, from 10 wt. % to 40 wt. %, from 20 wt. % to 30 wt. %, from 15 wt. % to 30 wt. %, or any subset thereof of the acrylate monomer, on the basis of the total polymer weight of the ethylene-acrylate copolymer. It should be understood that at least 80 wt. %, at least 90 wt. %, at least 99 wt. %, or even at least 99.9 wt. % of the ethylene-acrylate copolymer may comprise the combination of ethylene residues and acrylate residues, based on the total polymer weight of the ethylene-acrylate copolymer.

The ethylene-acrylate copolymer may have a melt index (I₂) of from 0.5 g/10 min to 8 g/10 min. In embodiments, the ethylene-acrylate copolymer may have a melt index (I₂) of from 0.5 g/10 min to 8 g/10 min, from 0.5 g/10 min to 6 g/10 min, from 0.5 g/10 min to 4 g/10 min, from 0.5 g/10 min to 2 g/10 min, from 1 g/10 min to 10 g/10 min, from 2 g/10 min to 10 g/10 min, from 4 g/10 min to 10 g/10 min, from 6 g/10 min to 10 g/10 min, from 8 g/10 min to 10 g/10 min, from 2 g/10 min to 8 g/10 min, from 4 g/10 min to 6 g/10 min, or any subset thereof. Suitable ethylene-acrylate copolymers may include the ELVALOY^{™} line of polymers, available from Dow Inc., Midland, MI.

The second skin layer 104, 204 may comprise an ethylene/vinyl acetate (EVA) copolymer. In embodiments, the second skin layer 104, 204 may comprise at least 50 wt. %, such as at least 60 wt. %, at least 70 wt. %, at least 80 wt. %, at least 90 wt. %, at least 95 wt. %, at least 99 wt. %, or even at least 99.9 wt. % of the ethylene/vinyl acetate (EVA) copolymer, based on the total polymer weight of the second core layer 110.

The EVA copolymer may comprise from 9 to 28 wt.% vinyl acetate comonomer, based on the total polymer weight of the ethylene/vinyl acetate copolymer. All individual values and subranges of from 9 to 28 wt.% are disclosed and included herein. In embodiments, the ethylene/vinyl acetate copolymer may comprise from 10 to 25 wt.%, from 12 to 23 wt.%, or from 15 to 20 wt.% of vinyl acetate comonomer, based on total weight of the ethylene/vinyl acetate copolymer. Examples of suitable commercially available ethylene/vinyl acetate copolymers include polymers under the name ELVAX^{™}, available from Dow Inc., Midland, MI.

The second skin layer 104, 204 may comprise polyisobutylene. In embodiments, the second skin layer 104, 204 may comprise from 0 wt. % to 10 wt. % of polyisobutylene, on the basis of the total polymer weight of the second skin layer 104, 204. In embodiments, the second skin layer 104, 204 may comprise from 0.1 wt. % to 10 wt. %, from 0.5 wt. % to 10 wt. %, from 1 wt. % to 10 wt. %, from 2 wt. % to 10 wt. %, from 4 wt. % to 10 wt. %, from 6 wt. % to 10 wt. %, from 8 wt. % to 10 wt. %, from 0 wt. % to 8 wt. %, from 0 wt. % to 6 wt. %, from 0 wt. % to 4 wt. %, from 0 wt. % to 2 wt. %, from 1 wt. % to 8 wt. %, from 2 wt. % to 8 wt. %, from 4 wt. % to 6 wt. %, or any subset thereof of polyisobutylene, on the basis of the total polymer weight of the second skin layer 104, 204.

### The Overall Multilayer Film

The multilayer film 100, 200 may have a thickness of less than 70 µm. As described previously, it is desired to create multilayer films, which can meet the required mechanical properties while minimizing the thickness of the film. In embodiments, the multilayer film 100, 200 may have a thickness of less than 60 µm, less than 50 µm, less than 40 µm, less than 30 µm, less than 25 µm, less than 23 µm, less than 19 µm, from 10 µm to 70 µm, from 10 µm to 50 µm, from 10 µm to 30 µm, from 10 µm to 25 µm, from 10 µm to 20 µm, from 15 µm to 70 µm, from 15 µm to 50 µm, from 15 µm to 30 µm, from 15 µm to 25 µm, from 15 µm to 20 µm, or any subset thereof.

Still referring to FIG. 1 and FIG. 2, the first skin layer 102, 202 and/or the second skin layer 104, 204 may independently have a thickness of from 5 % to 15 % of a thickness of the multilayer film 100, 200. In embodiments, the first skin layer 102, 202 and/or the second skin layer 104, 204 may independently have a thickness of from 5 % to 12.5 %, from 7.5 % to 15 %, from 7.5 % to 12.5 %, or any subset thereof of a thickness of the multilayer film 100, 200.

The first core layer 108, 208 and the third core layer 112, 212 may independently have a thickness of from 3 % to 45 %, from 3 % to 40 %, from 3 % to 35 %, from 3 % to 30 %, from 3 % to 25%, from 3 % to 20%, from 3 % to 15%, from 3% to 10%, from 5 % to 45 %, from 10% to 45 %, from 15 % to 45 %, from 20 % to 45 %, from 30 % to 45 %, from 5 % to 40 %, from 10 % to 35 %, from 15 % to 30 %, or any subset thereof of a thickness of the multilayer film 100, 200.

The second core layer 110, 210 may have a thickness of less than 20 % of a thickness of the multilayer film 100, 200. Without being limited by theory, it is believed that the performance of the multilayer film 100, 200 may be optimized when the second core layer 110, 210 is at its thinnest. However, due to manufacturing challenges and variability in layer thickness, it may not be possible to create an second core layer less than 3% of the thickness of the multilayer film 100, 200. In embodiments, the second core layer 110, 210 may have a thickness of less than or equal to 10 %, less than or equal to 5 %, from 3 % to 20 %, from 3 % to 15 %, from 3 % to 10 %, from 3 % to 7 %, from 3% to 5%, from 1 % to 20 %, from 5 % to 20 %, or any subset thereof of the thickness of the multilayer film 100, 200. In embodiments, the second core layer 110, 210 may have a thickness of from 3 % to 7 % of a thickness of the multilayer film 100, 200.

Referring now to FIG. 2, the fourth core layer 214 and the fifth core layer 216 may independently have a thickness of from 3 % to 45 %, from 3 % to 40 %, from 3 % to 35 %, from 3 % to 30 %, from 3 % to 25 %, from 3 % to 20 %, from 3 % to 15 %, from 3 % to 10 %, from 5 % to 45 %, from 10 % to 45 %, from 15 % to 45 %, from 20 % to 45 %, from 30 % to 45 %, from 5 % to 40 %, from 10% to 35 %, from 15 % to 30 %, or any subset thereof of a thickness of the multilayer film 100, 200.

Referring now to FIG. 3, the sixth core layer 318 and the seventh core layer 320 may independently have a thickness of from 3 % to 45 %, from 3 % to 40 %, from 3 % to 35 %, from 3 % to 30 %, from 3 % to 25 %, from 3 % to 20 %, from 3 % to 15 %, from 3 % to 10 %, from 5 % to 45 %, from 10 % to 45 %, from 15 % to 45 %, from 20 % to 45 %, from 30 % to 45 %, from 5 % to 40 %, from 10% to 35 %, from 15 % to 30 %, or any subset thereof of a thickness of the multilayer film 100, 200.

The multilayer film 100, 200 may have a density of from 0.902 g/cc to 0.930 g/cc. In embodiments, the multilayer film 100, 200 may have a density of from 0.902 g/cc to 0.925 g/cc, from 0.902 g/cc to 0.9.20 g/cc, from 0.902 g/cc to 0.915 g/cc, from 0.902 g/cc to 0.910 g/cc, from 0.910 g/cc to 0.930 g/cc, from 0.915 g/cc to 0.930 g/cc, from 0.920 g/cc to 0.930 g/cc, from 0.905 g/cc to 0.925 g/cc, from 0.910 g/cc to 0.920 g/cc or any subset thereof.

The multilayer film 100, 200 may have a normalized Dart Drop Impact Type A of at least 25 g/µm. In embodiments, the multilayer film 100, 200 may have a Dart Drop Impact Type A of at least 26 g/µm, at least 27 g/µm, at least 28 g/µm, at least 29 g/µm, at least 30 g/µm, from 25 g/µm to 40 g/µm, from 28 g/µm to 40 g/µm, from 30 g/µm to 40 g/µm or any subset thereof.

The multilayer film 100, 200 may have a Dart Drop Impact Type A of at least 400 g, such as at least 450 g, at least 500 g, at least 550 g, at least 600 g, or any subset thereof. The Dart Drop Impact Type A is determined according to ISO 7765-1/2005.

The multilayer film 100, 200 may have a normalized Elmendorf Cross Direction Tear resistance of at least 30 gf/µm. In embodiments, the multilayer film 100, 200 may have an Elmendorf Cross Direction Tear resistance of at least 30.5 gf/µm, at least 31 gf/µm, at least 35 gf/µm, at least 40 gf/µm, from 30 gf/µm to 50 gf/µm, or any subset thereof. The Elmendorf Tear resistance is determined according to ASTM D1922-15.

The multilayer film 100, 200 may have an Elmendorf Cross Direction Tear resistance of at least 500 grams force (gf). In embodiments, the multilayer film 100, 200 may have an Elmendorf Cross Direction Tear resistance of at least 550 gf, at least 600 gf, at least 650 gf, at least 700 gf, at least 750 gf, at least 800 gf, at least 850 gf, at least 900 gf, from 500 gf to 3000 gf, from 550 gf to 3000 gf, from 600 gf to 3000 gf, from 650 gf to 3000 gf, from 700 gf to 3000 gf, from 750 gf to 3000 gf, from 800 gf to 3000 gf, from 850 gf to 3000 gf, from 900 gf to 3000 gf, or any subset thereof.

The multilayer film 100, 200 may have a normalized Elmendorf Machine Direction Tear resistance of at least 7 gf/µm. In embodiments, the multilayer film 100, 200 may have an Elmendorf Machine Direction Tear resistance of at least 7.1 gf/µm, at least 7.2 gf/µm, at least 7.5 gf/µm, at least 8 gf/µm, at least 9 gf/µm, at least 10.0 gf/µm, from 7 gf/µm to 15 gf/µm, from 7.1 gf/µm to 15 gf/µm, from 7.5 gf/µm to 15 gf/µm, from 8 gf/µm to 15 gf/µm, or any subset thereof.

The multilayer film 100, 200 may have an Elmendorf Machine Direction Tear resistance of at least 100 gf, such as at least 125 gf, at least 200 gf, at least 250 gf, at least 300 gf, from 100 gf to 1500 gf, from 125 gf to 1500 gf, from 200 gf to 1500 gf, from 300 gf to 1500 gf, or any subset thereof.

The multilayer film 100, 200 may have a machine direction (MD) 2 % secant modulus of at least 140 mega-pascals (MPa). In embodiments, the multilayer film 100, 200 may have a machine direction (MD) 2 % secant modulus of at least 145 MPa, at least 150 MPa, at least 155 MPa, at least 160 MPa, at least 165 MPa, from 140 MPa to 200 MPa, from 145 MPa to 200 MPa, from 150 MPa to 200 MPa, from 155 MPa to 200 MPa, from 160 MPa to 200 MPa, from 165 MPa to 200 MPa, or any subset thereof.

The multilayer film 100, 200 may have a cross direction (CD) 2 % secant modulus of at least 140 mega-pascals (MPa). In embodiments, the multilayer film 100, 200 may have a cross direction (CD) 2 % secant modulus of at least 145 MPa, at least 150 MPa, at least 155 MPa, at least 160 MPa, at least 165 MPa, from 140 MPa to 200 MPa, from 145 MPa to 200 MPa, from 150 MPa to 200 MPa, from 155 MPa to 200 MPa, from 160 MPa to 200 MPa, from 165 MPa to 200 MPa, or any subset thereof.

It should be understood that the multilayer film 100 may comprise 5 or more layers. In embodiments, the multilayer film 100 may comprise more than 5 layers, such as 7, 9, or 11 layers.

Multilayer films 100 disclosed herein can be produced using techniques known to those of skill in the art based on the teachings herein. For example, the multilayer film may be produced by film lamination and/or coextrusion. The formation of coextruded multilayer films 100 is known in the art and applicable to the present disclosure. Coextrusion systems for making multilayer films 100 employ at least two extruders feeding a common die assembly. The number of extruders is dependent upon the number of different materials or polymer. For example, a five-layer coextrusion may require up to five extruders although less may be used if two or more of the layers are made of the same materials or polymers.

In some embodiments, the multilayer film 100, 200 may be a blown film.

### Additives

It should be understood that any of the foregoing layers can further comprise one or more additives as known to those of skill in the art such as, for example, antioxidants, ultraviolet light stabilizers, thermal stabilizers, slip agents, antiblock agents, antistatic agents, pigments or colorants, processing aids, crosslinking catalysts, flame retardants, fillers and foaming agents. The layer may contain any amounts of such additives, such as from 0 wt. % to 10 wt. %, from 0 wt. % to 5 wt. %, from 0 wt. % to 1 wt. %, from 0 wt. % to 0.1 wt. %, from 0 wt. % to 0.001 wt. %, or any subset thereof, based on a weight of the layer.

### Articles

Embodiments of the present disclosure also provide articles including any of the inventive multilayer films described herein. Examples of such articles can include wraps, packages, flexible packages, pouches, and sachets. Articles of the present disclosure can be formed from the multilayer films disclosed herein using techniques known to those of skill in the art in view of the teachings herein. Articles of the present disclosure may include a silage wrapping film comprising one or more multilayer films.

### TESTING METHODS

### Density

Density is measured in accordance with ASTM D792, and expressed in grams/cc (g/cc).

### Melt Indices (I₂, I₁₀, and I₂₁)

Melt Index (I₂) is measured in accordance with ASTM D 1238-10 at 190 Celsius and 2.16 kg, Method B, and is expressed in grams eluted/10 minutes (g/10 min).

Melt Index (I₁₀) is measured in accordance with ASTM D 1238-10 at 190 Celsius and 10 kg, Method B, and is expressed in grams eluted/10 minutes (g/10 min).

### Improved Comonomer Composition Distribution (ICCD)

Details of the ICCD method can be found in U.S. Patent Application Number 17/632598, which is incorporated by reference herein.

### Conventional GPC (M_{w}, Mₙ, M_{w}/Mₙ)

Details of the GPC method can be found in U.S. Patent Application Number 17/632598, which is incorporated by reference herein.

### DSC Method - Heat of Fusion

Differential scanning calorimetry is a common technique that can be used to examine the melting and crystallization of semi-crystalline polymers. General principles of DSC measurements and applications of DSC to studying semi-crystalline polymers are described in standard texts (e.g., E. A. Turi, ed., Thermal Characterization of Polymeric Materials, Academic Press, 1981).

The Heat of Fusion is determined using DSC from TA Instruments, Inc. The test is conducted in reference to ASTM standard D3428. The calibration is performed by preparing 2-3 mg of indium and placing it in a T-zero aluminum pan. The pan is then loaded into the DSC instrument and subjected to the following heating program cycle: 1) equilibrate test chamber at 180 °C, 2) hold temperature at 180 °C for 1 min., 3) ramp temperature down to 130 °C at 10 °C/min., 4) hold temperature at 130 °C for 3 min., and 5) ramp temperature at 10 °C/min. to 180 °C. Once completed, the last heat curve conducted in step 5 is analyzed to determine the melting temperature of the indium sample. The DSC is considered to be working in compliance should the melting temperature be within a 0.5 °C tolerance of 156.6 °C.

For sample testing, the polymer samples are first pressed into a thin film at a temperature of 190 °C. About 4 to 5 mg of sample is weighed out and placed in the DSC pan. The lid is crimped on the pan to ensure a closed atmosphere. The sample pan is placed in the DSC cell and is equilibrated at 180 °C. The sample is kept at this temperature for 5 minutes. Then the sample is cooled at a rate of 10 °C/min to -90 °C and kept isothermally at that temperature for 5 minutes. Subsequently, the sample is heated at a rate of 10 °C/min to 150 °C (to ensure complete melting); this step is designated as the 2nd heating curve. The resulting enthalpy curves are analyzed for peak melt temperature, onset and peak crystallization temperatures, and the heat of fusion (also known as heat of melting), ΔHf. The heat of fusion, in Joules/gram, is measured from the 2nd heating curve by performing a linear integration of the melting endotherm in accordance to the baseline

### Dart

The Dart Drop test follows ISO 7765-1/2005 Method A and provides a measure of the energy needed to cause a plastic film to fail under specified conditions of impact by a free falling dart. The test result is the energy, expressed in terms of the weight of the missile falling from a specified height, which would result in the failure of 50% of the specimens tested. The film sample is conditioned for at least 40 hours at 23 °C (± 2 °C) and 50% R.H (± 10 %) before the test which is conducted at 23 °C (± 2 °C) and 50% R.H (± 10 %). Method-A, which uses a 38mm diameter dart head and 660mm drop height, was employed for the current film samples. The material of construction of Dart head is Aluminum. The sample thickness is measured at the sample center and the sample is then clamped by an annular specimen holder with an inside diameter of 125mm. The dart is loaded above the center of the sample and released by either a pneumatic or an electromagnetic mechanism. The Dart is loaded with a starting weight which is subsequently either increased or decreased by a chosen weight depending on pass/fail from each drop. About 20-25 specimens are typically used for the drop experiments. Finally, a staircase method as per ISO 7765-1/2005 is employed to calculate the 'Dart' value based on the collection of pass/fail data, the starting weight, and the weight increment.

### Elmendorf Tear Resistance

Average Elmendorf Tear Resistance is measured in machine direction (MD) and cross-machine direction (CD) in accordance with ASTM D1922 -15.

### 2% Secant Modulus

2% secant modulus is measured in machine direction (MD) and cross-machine direction (CD) in accordance with ISO 527-3

### EXAMPLES

The following examples are provided to illustrate embodiments described in this disclosure and are not intended to limit the scope of this disclosure or its appended claims.

### Materials

DOWLEX^{™} 2645 (also referred to herein as "2645") is a linear low-density polyethylene commercially available from Dow Inc., (Midland, MI). DOWLEX^{™} 2645 has a density of 0.918 g/cc and melt index (I₂) of 0.8 g/10 min. DOWLEX^{™} 2645 is an ethylene-based polymer as that term is defined herein.

LDPE 450E (also referred to herein as "450E")is a low-density polyethylene commercially available from Dow Inc., (Midland, MI). LDPE 450E has a density of 0.923 g/cc and melt index (I₂) of 2.0 g/10 min. LDPE 450E is an ethylene-based polymer as that term is defined herein.

ELVALOY^{™} AC 3117 (also referred to herein as "EA") is an ethylene-acrylate copolymer (83 % ethylene and 17 % butyl acrylate) having a density of 0.924 g/cc and a melt index (I₂) of 1.5 g/10 min and commercially available from Dow Inc., (Midland, MI). ELVALOY^{™} AC 3117 is an ethylene-acrylate copolymer as that term is defined herein.

XUS 39003.00 (also referred to herein as "EP") is an ethylene-propylene copolymer commercially available from Dow Inc.(Midland, MI). EP comprises 27.1 wt.% propylene comonomer and 72.9 wt.% ethylene monomer and has a density of 0.867 g/cc, a melt index (I₂) of 0.90 g/10 min, a I₁₀/I₂ of 10.82, a heat of fusion of 50.24 J/g, and a Mw/Mn of 3.98. EP has a proportion of inversely inserted propylene units based on 2, 1 insertion of 0.8 wt. %, where weight percent is based on total weight of EP. EP is an ethylene-based polymer as that term is defined herein.

VERSIFY^{™} 2300 (also referred to herein as "PP") is a polypropylene having a density of 0.869 g/cc and a melt index (I₂) of 0.2.0 g/10 min at 230 °C and 2.16 kg. VERSIFY^{™} 2300 is commercially available from Dow Inc., (Midland, MI). VERSIFY^{™} 2300 is an ethylene-based polymer as that term is defined herein.

Sample 1 (also referred to herein as "S-1") is an experimental ethylene-propylene copolymer having a density of 0.910 g/cc, a melt index (I₂) of 1.0 g/ 10 min. Sample 1 comprises 4.8% wt.% propylene copolymer and 95.2 wt.% ethylene monomer. It has an I₁₀/I₂ of 10.15, a heat of fusion of 118.9 J/g, and a Mw/Mn of 2.52. EP has a proportion of inversely inserted propylene units based on 2, 1 insertion of 0.8 wt. %, where weight percent is based on total weight of EP. EP is an ethylene-based polymer as that term is defined herein. Synthesis conditions are described in Table 2.

Sample 2 (also referred to herein as "S-2") is an experimental ethylene-propylene copolymer having a density of 0.910 g/cc, a melt index (I₂) of 3.0 g/ 10 min. Sample 2 comprises 4.6% wt.% propylene copolymer and 95.4 wt.% ethylene monomer. It has an I₁₀/I₂ of 8.06, a heat of fusion of 130.0 J/g, and a Mw/Mn of 2.57. EP has a proportion of inversely inserted propylene units based on 2, 1 insertion of 0.8 wt. %, where weight percent is based on total weight of EP. EP is an ethylene-based polymer as that term is defined herein. Synthesis conditions are described in Table 2.

**Table 2**

| Run | ***S-1*** | ***S-3*** |
|---|---|---|
| Description | **1 MI** | **3 MI** |
| MI | 1.01 | 2.83 |
| I10/I2 | 10.15 | 8.06 |
| Density | 0.9101 | 0.9102 |
| | | |
| Catalyst-1 Type | 99.00 | 99.00 |
| Total Catalyst Efficiency | 1.62 | 1.60 |
| Co-Catalyst-1 Type | 4.00 | 4.00 |
| Co-Catalyst-1 Molar Ratio | 1.17 | 1.17 |
| Co-Catalyst-2 Type | 3.00 | 3.00 |
| Co-Catalyst-2 Molar Ratio | 19.96 | 19.97 |
| | | |
| Reactor Control Temperature | 185.05 | 185.00 |
| Fresh Hydrogen Mole% | 0.23 | 0.29 |
| FTnIR Exit Monomer Conc. (cor.) | 11.99 | 12.13 |
| Log Viscosity | 3.02 | 2.78 |
| Production rate | 273.68 | 320.65 |
| Comonomer /Olefin Ratio | 20.53 | 21.42 |
| | | |
| | | |
| Catalyst-1 Type | 0.00 | 0.00 |
| Catalyst-1 Efficiency | 0.00 | 0.00 |
| Co-Catalyst-1 Type | 0.00 | 0.00 |
| Co-Catalyst-1 Molar Ratio | 20.72 | 20.72 |
| Co-Catalyst-2 Type | 0.00 | 0.00 |
| Co-Catalyst-2 Molar Ratio | 20.72 | 20.72 |
| | | |
| Reactor Control Temperature | 197.16 | 197.15 |
| Fresh Hydrogen Mole% | 0.679 | 0.679 |
| FTnIR Exit Monomer Conc. (cor.) | 12.41 | 12.41 |
| FTnIR Correction Factor | 9.99 | 9.99 |
| Log Viscosity | 2.73 | 2.77 |
| Primary Reactor Split | #N/A | #N/A |
| Comonomer /Olefin Ratio | 100.00 | 100.00 |

S-3 is a polyethylene having a density of 0.928 g/cc and melt index (I2) of 0.85 g/10 min. S=3 had a first PE fraction area (45-87 °C) of 57.96 %, a second PE fraction area (95-120 °C) of 29.23% and a first PE fraction area to second PE fraction area ratio of 1.98 S-1 was prepared by a method and utilizing the catalysts and reactors described below.

All raw materials (monomer and comonomer) and the process solvent (a narrow boiling range high-purity isoparaffinic solvent, Isopar-E) were purified with molecular sieves before introduction into the reaction environment. Hydrogen was supplied pressurized as a high purity grade and was not further purified. The reactor monomer feed stream was pressurized via a mechanical compressor to above reaction pressure. The solvent and comonomer feed was pressurized via a pump to above reaction pressure. The individual catalyst components were manually batch diluted with purified solvent and pressured to above reaction pressure. All reaction feed flows were measured with mass flow meters and independently controlled with computer automated valve control systems.

A two reactor system was used in a series configuration. Each continuous solution polymerization reactor was a liquid full, non-adiabatic, isothermal, circulating, loop reactor which mimics a continuously stirred tank reactor (CSTR) with heat removal. Independent control of all fresh solvent, monomer, comonomer, hydrogen, and catalyst component feeds was possible. The total fresh feed stream to each reactor (solvent, monomer, comonomer, and hydrogen) was temperature controlled to maintain a single solution phase by passing the feed stream through a heat exchanger. The total fresh feed to each polymerization reactor was injected into the reactor at two locations with approximately equal reactor volumes between each injection location. The fresh feed was controlled with each injector receiving half of the total fresh feed mass flow. The catalyst components were injected into the polymerization reactor through injection stingers. The primary catalyst component feed was computer controlled to maintain each reactor monomer conversion at the specified targets. The cocatalyst components were fed based on calculated specified molar ratios to the primary catalyst component. Immediately following each reactor feed injection location, the feed streams were mixed with the circulating polymerization reactor contents with static mixing elements. The contents of each reactor were continuously circulated through heat exchangers responsible for removing much of the heat of reaction and with the temperature of the coolant side responsible for maintaining an isothermal reaction environment at the specified temperature. Circulation around each reactor loop was provided by a pump.

In dual series reactor configuration the effluent from the first polymerization reactor (containing solvent, monomer, comonomer, hydrogen, catalyst components, and polymer) exited the first reactor loop and was added to the second reactor loop.

The second reactor effluent entered a zone where it was deactivated with the addition of and reaction with a suitable reagent (water). At this same reactor exit location other additives were added for polymer stabilization (typical antioxidants suitable for stabilization during extrusion and film fabrication like Octadecyl 3,5-Di-Tert-Butyl-4-Hydroxyhydrocinnamate, Tetrakis(Methylene(3,5-Di-Tert-Butyl-4-Hydroxyhydrocinnamate))Methane, and Tris(2,4-Di-Tert-Butyl-Phenyl) Phosphite).

Following catalyst deactivation and additive addition, the reactor effluent entered a devolatization system where the polymer was removed from the non-polymer stream. The isolated polymer melt was pelletized and collected. The non-polymer stream passed through various pieces of equipment which separate most of the ethylene which was removed from the system. Most of the solvent and unreacted comonomer was recycled back to the reactor after passing through a purification system. A small amount of solvent and comonomer was purged from the process.

The reactor stream operating conditions and feed data are described in Table 3A. Table 3B shows the catalysts referenced in Table 3A.

**Table 3A**

| Reactor Configuration | Type | Dual Series |
|---|---|---|
| Comonomer type | Type | 1-octene |
| First Reactor Feed Solvent / Ethylene Mass Flow Ratio | g/g | 5.3 |
| First Reactor Feed Comonomer / Ethylene Mass Flow Ratio | g/g | 0.30 |
| First Reactor Feed Hydrogen / Ethylene Mass Flow Ratio | g/g | 5.4E-05 |
| First Reactor Temperature | °C | 175 |
| First Reactor Pressure | barg | 50 |
| First Reactor Ethylene Conversion | % | 90.9 |
| First Reactor Catalyst Type | Type | Catalyst Componen t 1 |
| First Reactor Co-Catalyst 1 Type | Type | Co-Catalyst 1 |
| First Reactor Co-Catalyst 2 Type | Type | Co-Catalyst 2 |
| First Reactor Residence Time | min | 8.5 |
| Second Reactor Feed Solvent / Ethylene Mass Flow Ratio | g/g | 2.1 |
| Second Reactor Feed Comonomer / Ethylene Mass Flow Ratio | g/g | 0.061 |
| Second Reactor Feed Hydrogen / Ethylene Mass Flow Ratio | g/g | 1.1E-03 |
| Second Reactor Pressure | barg | 50 |
| Second Reactor Ethylene Conversion | % | 84.2 |
| Second Reactor Catalyst Type | Type | Catalyst Componen t 2 |
| Second Reactor Co-Catalyst 1 Type | Type | Co-Catalyst 1 |
| Second Reactor Co-Catalyst 2 Type | Type | Co-Catalyst 2 |
| Second Reactor Catalyst Metal | Type | Zr |
| Second Reactor Co-Catalyst 1 to Catalyst Molar | mol/mol | 17.1 |

| | | |
|---|---|---|
| First Reactor Catalyst Metal | Type | Zr |
| First Reactor Co-Catalyst 1 to Catalyst Molar Ratio (B to Zr ratio) | Rati O | 1.5 |
| First Reactor Co-Catalyst 2 to Catalyst Molar Ratio (Al to Zr ratio) | Rati O | 11.5 |
| Ratio (B to Metal ratio) | | |
| Second Reactor Co-Catalyst 2 to Catalyst Molar Ratio (Al to Metal ratio) | mol/mol | >100.0 |
| Second Reactor Residence Time | min | 5.7 |
| | | |

**Table 3B**

| | |
|---|---|
| Catalyst component 1 | Zirconium, dimethyl[[2,2‴-[[bis[1-methylethyl)germylene]bis(methyleneoxy-kO)]bis[3",5,5"-tris(1,1-dimethylethyl)-5'-octyl[1,1':3',1"-terphenyl]-2'-olato-kO]](2-)] |
| Catalyst component 2 | Zirconium, dimethyl [[2,2‴-[1,3-propanediylbis(oxy-kO)jbis[3-[2,7-bis(1,1-dimethylethyl)-9H-carbazol-9-yl]]-5'-(dimethyloctylsilyl)-3'-methyl-5-(1,1,3,3-tetramethylbutyl)[1,1]-biphenyl]-2-olato-kO]](2-)]- |
| Co-catalyst 1 | bis(hydrogenated tallow alkyl)methylammonium tetrakis(pentafluoro phenyl)borate(1-) |
| Co-catalyst 2 | modified methyl aluminoxane |

### 9-Laver Films

A series of 9 layer, multilayer blown films were prepared on a Windmoeller and Hoelscher Corporation coextrusion line whose capabilities are shown in Table 4.

**Table 4**

| | |
|---|---|
| Working output | 180-200 kg/h |
| Thickness range | 15 to 250 mic |
| Haul-off speed range | 3 to 120 m/min |
| BUR range | 1.8 to 3.0 |
| Layflat range | 600 to 1600 mm |
| Die diameter | 250 mm |
| Available die gaps | 1.25 mm |
| | 2.25 mm |
| Extruders A, B, H & I diameter | 60 mm |
| Extruders C, D, E, F & G diameter | 50 mm |
| Extruders A, B, H & I layer distribution | 10 to 20% |
| Extruders C, D, E, F & G layer distribution | 5 to 15% |

Table 5 gives the compositions of some 9-layer multilayer films of the present disclosure. Comparative example A (CE-A) had a thickness of 25 µm. Examples 1-3 had a thickness of 19 µm. Layers H and I comprise a blend of 20 % LDPE 450E and 80 % DOWLEX^{™} 2645.

**Table 5: 9-Layer Film Compositions**

| **Layer** | **A** | **B** | **C** | **D** | **E** | **F** | **G** | **H** | **I** |
|---|---|---|---|---|---|---|---|---|---|
| Thickness (%) | 10 | 15 | 10 | 12 | 6 | 12 | 10 | 12.5 | 12.5 |
| CE-A | EA | 2645 | 2645 | 2645 | 2645 | 2645 | 2645 | 450E + 2645 | 450E + 2645 |
| EX-1 | EA | S-3 | S-3 | 2645 | PP | 2645 | S-3 | 450E + 2645 | 450E + 2645 |
| EX-2 | EA | S-3 | S-3 | 2645 | S-1 | 2645 | S-3 | 450E + 2645 | 450E + 2645 |
| EX-3 | EA | S-3 | S-3 | 2645 | EP | 2645 | S-3 | 450E + 2645 | 450E + 2645 |
| EX-4 | EA | S-3 | S-3 | 2645 | S-2 | 2645 | S-3 | 450E + 2645 | 450E + 2645 |

Table 6 shows some mechanical properties of the nine-layer films described in Table 6.

**Table 6: 9-Layer Film Properties**

| **Test** | **Dart Drop Impact** - **Type A** | **Elmendorf CD** | **Elmendorf T MD** | **2% Secant Modulus CD** | **2% Secant Modulus MD** |
|---|---|---|---|---|---|
| Units | g | gf | gf | MPa | MPa |
| CE-A | 418 | 537 | 146 | 144.4 | 145.3 |
| EX-1 | 616 | 621 | 135 | 178.4 | 167.2 |
| EX-2 | 616 | 718 | 140 | 183.3 | 165.3 |
| EX-3 | 604 | 909 | 231 | 167.6 | 158.7 |
| EX-4 | 556 | 724 | 128 | 184.8 | 166.6 |

As is shown in Table 6, the example films EX-1 to EX-4 all have improved impact strength, CD Elmendorf tear, and 2% secant modulus when compared to the reference comparative example CE-A , even though CE-A is 24% thicker. This improvement is believed to be caused by the presence of the first and third core layers when used in combination with the second core layer.

While particular embodiments of the present disclosure have been illustrated and described, it would be obvious to those skilled in the art that various other changes and modifications can be made without departing from the spirit and scope of the disclosure. It is therefore intended to cover in the appended claims all such changes and modifications that are within the scope of this disclosure.

## Claims

1. A multilayer film comprising a first skin layer, a second skin layer, and a core positioned between the first skin layer and the second skin layer, wherein:
the first skin layer and the second skin layer comprise an ethylene based polymer;
the core comprises a first core layer, a second core layer, and a third core layer;
the first core layer and the third core layer independently comprise a polyethylene composition comprising:
(a) a first polyethylene fraction having a single peak in a temperature range of 45 °C to 87 °C in an elution profile via improved comonomer composition distribution (iCCD) analysis method, wherein a first polyethylene fraction area is an area in the elution profile beneath the single peak of the first polyethylene fraction between 45 °C and 87 °C; and
(b) a second polyethylene fraction having a single peak in a temperature range of 95 °C to 120 °C in the elution profile via iCCD analysis method and wherein a second polyethylene fraction area is an area in the elution profile beneath the single peak of the second polyethylene fraction between 95 °C and 120 °C;
wherein the polyethylene composition has a density of 0.910 g/cm³ to 0.940 g/cm³ and a melt index (I2) of 0.20 g/10 minutes to 10.0 g/10 minutes, wherein the first polyethylene fraction area comprises at least 40% of the total area of the elution profile, wherein a ratio of the first polyethylene fraction area to the second polyethylene fraction area is 0.75 to 2.5, and wherein the width of the single peak of the second polyethylene fraction at 50 percent peak height is less than 5.0 °C; and
the second core layer comprises ethylene-propylene copolymer, polypropylene copolymer, or combinations thereof.

2. The multilayer film of claim 1, wherein the second core layer is the central layer.

3. The multilayer film of any preceding claim, wherein the second skin layer comprises one or more of linear low density polyethylene (LLDPE), ethylene vinyl acetate copolymer (EVA), ethylene acrylate copolymer, or polyisobutylene.

4. The multilayer film of any preceding claim, wherein the multilayer film has a thickness less than 25 µm.

5. The multilayer film of any preceding claim, wherein the second core layer has a thickness of less than or equal to 10 % of a thickness of the multilayer film.

6. The multilayer film of any preceding claim, wherein the first skin layer, the second skin layer, or both further comprise low-density polyethylene (LDPE).

7. The multilayer film of any preceding claim, wherein the core further comprises:
a fourth core layer positioned between the first skin layer and the first core layer, and
a fifth core layer positioned between the third core layer and the second skin layer.

8. The multilayer film of claim 7, wherein the core further comprises:
a sixth core layer positioned between the first core layer and the second core layer; and
a seventh core layer positioned between the second core layer and the third core layer.

9. The multilayer film of claim 8, wherein the fourth core layer, the fifth core layer, the sixth core layer, and the seventh core layer each independently comprise LLDPE.

10. The multilayer film of any preceding claim, wherein the multilayer film has a Dart Drop Impact Type A of at least 25 g/µm, according to ISO 7765-1/2005 Method A.

11. The multilayer film of any preceding claim, wherein the multilayer film has an Elmendorf Cross Direction Tear resistance of at least 30 gf/µm, according to ASTM D1922-15.

12. The multilayer film of any preceding claim, wherein the multilayer film has an Elmendorf Machine Direction Tear resistance of at least 7 gf/µm, according to ASTM D1922-15.

13. The multilayer film of any preceding claim, wherein the multilayer film has a cross direction (CD) 2% secant modulus of at least 140 MPa, according to ISO 527-3.

14. The multilayer film of any preceding claim, wherein the multilayer film has a machine direction (MD) 2% secant modulus of at least 140 MPa, according to ISO 527-3

15. The multilayer film of any preceding claim, wherein
the core further comprises a fourth core layer and a sixth core layer positioned between the first skin layer and the second core layer;
the core further comprises a fifth core layer and a seventh core layer positioned between the second core layer and the second skin layer
the second core layer is the central layer,
the second core layer is positioned between the first core layer and the third core layer, and
the second core layer has a thickness less than or equal to 10 % of a thickness of the multilayer film.
